# EUROPÄISCHE PATENTSCHRIFT

(11) **EP 1 958 725 B1**
(45) Veröffentlichungstag und Bekanntmachung des Hinweises auf die Patenterteilung: **25.07.2012**
(21) Anmeldenummer: 07003211.5
(22) Anmeldetag: 15.02.2007
(51) Int. Cl.: B23K 9/32, H01R 9/11, H01R 13/00, H05B 7/12

(54) **Zusammenfassung des Schlauchs eines wassergekühlten Hochstromkabels mit dem massiven Kabelkopf**
Assembly of the conduit of a water-cooled high current cable with the compact cable head
Assemblage du tuyau d'un câble pour courant de haute intensité refroidi à l'eau avec la tête de câble massive

(43) Veröffentlichungstag der Anmeldung: 20.08.2008
(73) Patentinhaber: Dung, Arndt, 58093 Hagen (DE)
(72) Erfinder: Dung, Arndt, 58093 Hagen (DE)
(74) Vertreter: Kalkoff & Partner

(56) Entgegenhaltungen:
- DE-C1- 3 420 821
- US-A- 4 487 990

## Beschreibung

Die Erfindung betrifft die Zusammenfassung des Schlauchs eines wassergekühlten Hochstromkabels mit dem massiven Kabelkopf. Wassergekühlte Hochstromkabel kommen insbesondere in Zusammenhang mit der Energieversorgung von Lichtbogenschmelzöfen zum Einsatz. Hierbei ist das Hochstromkabel, dann auch die Zusammenfassung des Schlauchs des wassergekühlten Hochstromkabels mit den Kabelköpfen, im laufenden Betrieb auf das Senken und Heben des Elektrodentragarms und dann auch auf dessen Verschwenken zurückzuführenden, sowohl Zug- und Stauchbeanspruchungen als auch Torsionsbeanspruchungen unterworfen. Aufgrund dieser Beanspruchungen wirft die Zusammenfassung des Schlauchs des wassergekühlten Hochstromkabels mit seinen massiven Kabelköpfen Probleme auf. In zurückliegender Zeit hat man den das Hochstromkabel umgebenden Schlauch gegenüber dem Kabelkopf mit Schellenbändern festgelegt (DE-34 20 821 C1), in Zusammenhang damit ist der Kabelkopf dann auch schon mit Ringnuten versehen worden, in die der Schlauch verpreßt wird. Realisiert worden ist in jüngerer Zeit dann auch schon eine Sägezahnriffelung mit zur Kabelseite hin einfallenden Zahnflanken zur Stabilisierung der Schlauchklemmung durch die Schellenbänder auf dem Kabelkopf (US-A 4 487 990 und Katalog "Flohe-Hochstromkabel", Jg 1998). Die Sägezahnriffelung blockiert auf die Schlauchklemmung einwirkende Axialbeanspruchungen, der dann auch noch auftretenden Torsionsbeanspruchungen wegen kommt es allerdings immer noch zu die Standzeit dieser Zusammenfassung des Kabelschlauchs mit dem Kabelkopf beeinträchtigenden Verschleißerscheinungen.

Ausgehend vom Stand der Technik lag der Erfindung die Aufgabe zugrunde, eine Zusammenfassung des Schlauchs eines wassergekühlten Hochstromkabels mit dem massiven Kabelkopf zu realisieren, auch die beim Einsatz der Sägezahnriffelung immer noch verbleibenden nachteiligen Einwirkungen der Torsionsbeanspruchungen auf die Zusammenfassung des Schlauchs mit dem Kabelkopf zu mindern und somit die Standzeit der Zusammenfassung weitergehend zu verbessern.

Die Aufgabe wird mit der Zusammenfassung des Schlauchs eines wassergekühlten Hochstromkabels
durch einen weiteren an den mit der Sägezahnriffelung versehenen Bereich angrenzenden Bereich des Kabelkopfes, dessen Umfangsfläche gerändelt ist, der mit Hilfe in diesem Bereich angesetzten Klemmbändem bzw. Klemmschellen gegenüber diesem Bereich verpreßt ist,
gelöst.

Varianten der Erfindungen sind in den Unteransprüchen 2 und 3 angesprochen.

Die erfindungsgemäße Kombination der die Lagestabilisierung des Schlauches auf den Kabelkopf bewirkende Sägezahnriffelung gegenüber Axialbeanspruchungen mit der ergänzend vorgesehenen, Torsionsbeanspruchungen des Schlauches blockierenden Rändelung führt zu einer bislang nicht erzielbaren Standzeit der Zusammenfassung des das wassergekühlte Hochstromkabel umgebenden Schlauchs mit dem Kabelkopf mit der positiven Folge reduzierter Stillstandzeiten des mit dem Hochstrom zu versorgenden Aggregats .

In der Zeichnung ist die Erfindung weitergehend erläutert. Es zeigen:
- Figur 1: den neuen Kabelkopf im Längsschnitt,
- Figur 2: eine der Figur 1 entsprechende Darstellung mit auf den Kabelkopf aufgezogenem Schlauchende.

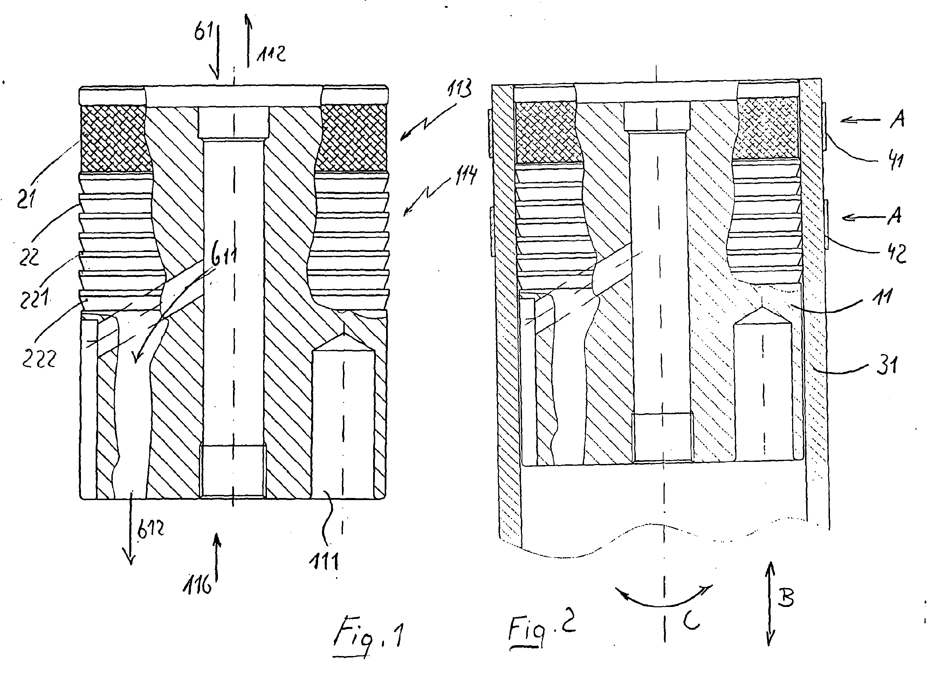

Der massive Kabelkopf ist mit 11 bezeichnet, die im Kabelkopf 11 befindlichen Aufnahmen für die Adern des nicht dargestellten Hochstromkabels mit 111. Anschlußseitig (112) weist der Kabelkopf 11 einen ersten Bereich 113 auf, der mit einer Rändelung 21 versehen ist, an den Bereich 113 schließt sich der mit einer stumpfen (221) Sägezahnriffelung 22 versehene Bereich 114 an. Der auf den Kabelkopf 11 aufgezogene Schlauch 31 (Figur 2) wird gegenüber dem Kabelkopf mittels im gerändelten Bereich 113 und im geriffelten Bereich 114 angesetzter Schellenbänder (Kabelschellen) 41 und 42 festgelegt. Die angezogenen Schellenbänder 41 und 42 verpressen den Schlauch 31 gegenüber den Bereichen 113 und 114 des Kabelkopfes. (Pfeile A in Figur 2). Die Sägezahnriffelung 22 blockiert Relativbewegungen zwischen Kabelkopf 11 und Kabelschlauch 31 in axialer Richtung (Doppelpfeil B in Figur 2), der gerändelte (21) Bereich 113 des Kabelkopfes 11 blockiert auf Torsionsbeansprungen zurückgehende Relativbewegungen (Doppelpfeil C in Figur 2) zwischen Kabelkopf 11 und Kabelschlauch 31.

Die Zahnflanken 222 der Sägezahnriffelung 22, in die der Schlauch 31 verpreßt wird, fallen zum kabelseitigen Ende 116 des Kabelkopfes 11 hin ein, der gerändelte Bereich befindet sich in einem am Umfang des Kabelkopfes 11 ausgebildeten Rücksprung 113, in den der Schlauch verpreßt wird.

Mit den Bezugsziffern 61, 611 und 612 ist die Kühlwasserführung gekennzeichnet. Die Zirkulation (Vor- und Rücklauf) des Kühlwassers ergibt sich aus dem elektrodenseitigen Kurzschluß der beiden den Stromkreis ergebenden Hochstromkabel.

### Bezugsziffernliste

- 11: Kabelkopf
- 111: Aufnahmen
- 112: (anschlußseitig)
- 113: gerändelter Bereich / Rücksprung
- 114: geriffelter Bereich
- 116: kabelseitiges Ende
- 21: Rändelung
- 22: Sägezahnriffelung
- 221: stumpfe Riffelung
- 222: Zahnflanken
- 31: Schlauch
- 41, 42: Schellenbänder (Kabelschellen)
- 61,611,612: Kühlwasserführung

## Patentansprüche

1. Zusammenfassung des Schlauchs (31) eines wassergekühlten Hochstromkabels mit dem massiven Kabelkopf (11) des Hochstromkabels durch den, einen mit einer sich über seinen Umfang erstreckenden stumpfen Sägezahnriffelung (22) mit zur Kabelseite hin einfallenden Zahnflanken (222) versehenen Bereich (114) überdeckenden, mit Hilfe von in diesem Bereich angesetzten Klemmbändern bzw. Klemmschellen (42) verpreßten Schlauch (31), **gekennzeichnet durch** einen weiteren an den mit der Sägezahnriffelung (22) versehenen Bereich angrenzenden Bereich (113) des Kabelkopfes (11), dessen Umfangsfläche gerändelt (21) ist, der mit Hilfe in diesem Bereich des Schlauches (31) angesetzten Klemmbändem bzw. Klemmschellen (41) gegenüber diesem Bereich verpreßt ist.

2. Zusammenfassung nach Anspruch 1, **dadurch gekennzeichnet, daß** der Kabelkopf (11) ausgehend von seinem anschlußseitigen Ende in Abfolge den mit einer gerändelten Umfangsfläche (21) versehenen Bereich (113) aufweist, an den sich der mit der Sägezahnriffelung (22) versehene Bereich (114) anschließt.

3. Zusammenfassung nach Anspruch 1 oder Anspruch 2, **dadurch gekennzeichnet, daß** der gerändelte Bereich (113) des Kabelkopfs (11) sich in einem am Umfang des Kabelkopfes (11) ausgebildeten Rücksprung befindet.

## Claims

1. Assembly of the conduit (31) of a water-cooled, high current cable including the compact cable head (11) of the high current cable provided by the conduit (31), which covers a region (114) that is provided with obtuse saw tooth ribbing (22) that extends over its circumference and includes tooth flanks (222) facing towards the cable side, and is pressed by means of clamps or respectively clips (42) that are affixed in the said region, **characterised by** an additional region (113) of the cable head (11), which is adjacent the region provided with the saw tooth ribbing (22) and has a knurled circumferential face (21), the said conduit being pressed against the said region by means of clamps or respectively clips (41) affixed in the said region of the conduit (31).

2. Assembly according to claim 1, **characterised in that** the cable head (11), proceeding from its end on the connection side, includes in succession the region (113) that is provided with a knurled circumferential face (21), to which is connected the region (114) that is provided with the saw tooth ribbing (22).

3. Assembly according to claim 1 or claim 2, **characterised in that** the knurled region (113) of the cable head (11) is situated in a recess configured at the circumference of the cable head (11).

## Revendications

1. Assemblage du tuyau (31) d'un câble pour courant haute intensité refroidi à l'eau avec la tête de câble (11) massive du câble pour courant haute intensité par le tuyau (31) recouvrant une zone (114) munie d'une cannelure en dent de scie (22) obtuse s'étendant sur sa circonférence avec des flancs de dent (222) s'engageant en direction du côté de câble, tuyau qui est pressé à l'aide de bandes de serrage ou de colliers de serrage (42) mis en place dans cette zone, **caractérisé par** une autre zone (113) de la tête de câble (11) jouxtant la zone munie de la cannelure en dent de scie (22), zone dont la surface circonférentielle (21) est moletée et le tuyau étant pressé par rapport à cette zone à l'aide de bandes de serrage ou de colliers de serrage (41) mis en place dans cette zone du tuyau (31).

2. Assemblage selon la revendication 1, **caractérisé en ce que** la tête de câble (11) en partant de son extrémité côté raccordement présente à la suite la zone (113), munie d'une surface circonférentielle (21) moletée, à laquelle se raccorde la zone (114) munie de la cannelure en dent de scie (22).

3. Assemblage selon la revendication 1 ou la revendication 2, **caractérisé en ce que** la zone (113) moletée de la tête de câble (11) se trouve dans un retrait formé sur la circonférence de la tête de câble (11).
